# EUROPEAN PATENT SPECIFICATION

(11) **EP 4 287 322 B1**
(45) Date of publication and mention of the grant of the patent: **19.11.2025**
(21) Application number: 21921981.3
(22) Date of filing: 08.02.2021
(51) Int. Cl.: H01M 4/62, H01M 4/04, H01M 4/133, H01M 4/134, H01M 4/1393, H01M 10/0525

(54) **BINDER, NEGATIVE-ELECTRODE SLURRY, NEGATIVE ELECTRODE, AND LITHIUM-ION BATTERY**
BINDEMITTEL, NEGATIVELEKTRODENAUFSCHLÄMMUNG, NEGATIVELEKTRODE UND LITHIUM-IONEN-BATTERIE
LIANT, BOUILLIE D'ÉLECTRODE NÉGATIVE, ÉLECTRODE NÉGATIVE, ET BATTERIE AU LITHIUM-ION

(30) Priority: 28.01.2021 CN 202110117295
(43) Date of publication of application: 06.12.2023
(73) Proprietor: AESC Japan Ltd., Kanagawa, 2520012 (JP)
(72) Inventor: LI, Ruonan, Shanghai 201315 (CN); SUN, Huayu, Shanghai 201315 (CN)
(74) Representative: Becker, Eberhard
(86) International application number: PCT/CN2021/076032
(87) International publication number: WO 2022/160382

(56) References cited:
- CN-A- 108 417 836
- CN-A- 108 470 884
- CN-A- 108 832 129
- CN-A- 111 662 418
- CN-A- 111 662 418
- CN-A- 111 668 485
- JP-A- 2002 141 068

## Description

### CROSS-REFERENCE TO RELATED APPLICATION

This application claims the priority benefit of China application serial no. 2021101172950, filed on January 28, 2021, with the tile of invention "BINDER, NEGATIVE-ELECTRODE SLURRY, NEGATIVE ELECTRODE, AND LITHIUM-ION BATTERY".

### Technical Field

Embodiments of the disclosure relate to a lithium-ion battery, and in particular to a binder, a negative-electrode slurry, a negative electrode, and a lithium-ion battery.

### Description of Related Art

The negative-electrode binder is one of the important auxiliary functional materials in the lithium-ion battery and is the main source of internal mechanical properties of an electrode. The main function is to bond together an active material with an active material and a current collector with an active material. The traditional negative-electrode binders are mainly materials such as styrene-butadiene rubber, acrylic polymers, or acrylate polymers. Although these materials have strong binding force and good electrochemical stability, the materials are nonconductive, which may easily increase the internal impedance of the negative electrode, such that the fast charging performance of the lithium-ion battery deteriorates.

In order to solve the above issue, the following two methods are mainly adopted in the prior art. First, the affinity of the active material with the binder is improved. For example, Patent Publication No. JP 5373388 B2 discloses a method for mechanochemical processing of a graphite particle. The method enables the graphite particle to have a hydrophilic surface, a uniform particle diameter, a reduced average particle diameter, an improved surface wettability, and an increased affinity with a aqueous binder, which are beneficial to the improvement of the charging efficiency of the lithium-ion battery. However, the method requires the use of special graphite particle processing equipment that is costly and cannot achieve the same effect for a battery system in which the negative-electrode active material is not graphite (for example, silicon).

Second, the traditional binder is replaced with a binder with preferred ion-conducting capability. For example, Patent Publication No. CN 105489898 B discloses a conductive aqueous binder that can improve the overall conductivity of a battery and includes graphene, carbon nanotubes, a cross-linked polymer, and a polyvalent metal ion water-soluble salt solution, wherein the graphene and the carbon nanotubes are respectively bonded with the cross-linked polymer through chemical bonds to form a three-dimensional conductive network structure, and the cross-linked polymer is cross-linked with the polyvalent metal ion water-soluble salt solution to form a three-dimensional binding network structure. However, since the conductive aqueous binder is mainly a combination of various existing materials, the components is complex, the cost of raw materials used for preparing the conductive aqueous binder is high, it is difficult to promote on a large scale, and there is an incompatibility issue when the conductive aqueous binder is applied to the negative electrode of a silicon system.

Patent Publication No. CN 108417836 A discloses a binder for an electrode of an ABA type triblock polymer. The two ends are polyacrylic blocks and the center is a polyacrylate block. The polyacrylic block is polymerized from a methacrylic monomer and/or an acrylic monomer, and the polyacrylate block is polymerized from one or more of methyl acrylate, butyl acrylate, hydroxyethyl acrylate, and hydroxypropyl acrylate. Since the polyacrylate block has a certain swelling capability on an electrolyte to form an ion-conducting channel, the ion-conducting capability of the binder can be improved to a certain extent. However, the inventors found that since the modulus of the binder for the electrode of the ABA type triblock polymer is too high, and the use of the binder alone causes the rigidity of an electrode piece to be too strong, causing an electrode material to fall off a foil.
Patent publication No. CN111662418 discloses an E-F-E type triblock lithiated polymer binder, both ends blocks E being acrylic blocks (i.e. alkenyl formic acid blocks) and the middle block F being an acrylate block.
Patent publication No. CN108470884 discloses a binder, comprising a tetrablock polymer, and the tetrablock polymer has a structure shown as B-C-B-A where the polymer block A is polymerized from an alkenyl formic acid monomer (acrylic acid); the polymer block B is polymerized from an aromatic vinyl monomer (styrene); the polymer block C is polymerized from an acrylate monomer.

Therefore, it is still required in the art to find a negative-electrode binder having strong ion-conducting capability, simple components, low cost, suitable modulus, and good thickening and dispersing effects, while being compatible with various negative-electrode systems and easy to promote on a large scale.

### SUMMARY

The objective of the embodiments of the disclosure is to provide a binder having strong ion-conducting capability, simple components, low cost, suitable modulus, and good thickening and dispersing effects, so that a lithium-ion battery using the binder has preferred fast charging capability, low direct current internal resistance, and preferred low temperature discharge capability.

In order to solve the above technical issue, an embodiment of the disclosure provides a binder, and the binder includes a first block polymer and a second block polymer;
the first block polymer is a lithiated tetrablock polymer, and the tetrablock polymer has a structure shown as B-C-B-A, wherein A represents a polymer block A, B represents a polymer block B, and C represents a polymer block C;
the polymer block A is polymerized from an alkenyl formic acid monomer;
the polymer block B is polymerized from an aromatic vinyl monomer;
the polymer block C is polymerized from an acrylate monomer; and
the second block polymer is a lithiated triblock polymer, and the triblock polymer has a structure shown as E-F-E, wherein E represents a polymer block E, and F represents a polymer block F;
the polymer block E is polymerized from an alkenyl formic acid monomer;
the polymer block F is polymerized from an acrylate monomer.

In some preferred solutions, a structure of the alkenyl formic acid monomer in the tetrablock polymer is 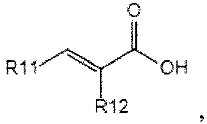 wherein R¹¹ and R¹² are independently hydrogen or a C_{1~4} alkyl group, and the C_{1~4} alkyl group is selected from a methyl group, an ethyl group, an n-propyl group, an isopropyl group, an n-butyl group, an isobutyl group, or a tert-butyl group; preferably, the alkenyl formic acid is an acrylic acid.

In some preferred solutions, a structure of the aromatic vinyl monomer in the tetrablock polymer is 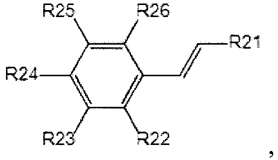 wherein R²¹, R²², R²³, R²⁴, R²⁵, and R²⁶ are independently hydrogen or a C_{1~4} alkyl group, and the C_{1~4} alkyl group is selected from a methyl group, an ethyl group, an n-propyl group, an isopropyl group, an n-butyl group, an isobutyl group, or a tert-butyl group; preferably, R²¹, R²², R²³, R²⁴, R²⁵, and R²⁶ are hydrogen or the methyl group, more preferably, the aromatic vinyl is styrene.

In some preferred solutions, a structure of the acrylate monomer in the tetrablock polymer is 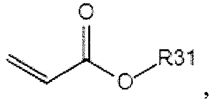 wherein R³¹ is a linear or branched C_{1~10} alkyl group; more preferably, R³¹ is a linear or branched C_{4~8} alkyl group, further preferably, R³¹ is

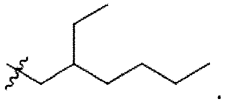

In some preferred solutions, the first block polymer has a structure shown as Formula 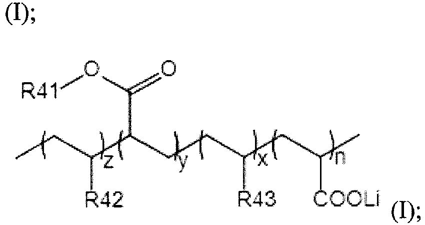 wherein n is 10~50; x is 200~500; y is 400~1000; z is 200~500;
R⁴¹ is a C_{4~8} alkyl group; preferably, R⁴¹ is 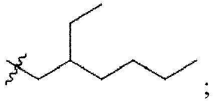
R⁴² and R⁴³ are a phenyl group or a C_{1~4} alkyl group substituted phenyl group, and the phenyl group of the C_{1~4} alkyl group is selected from a methyl group, an ethyl group, an n-propyl group, an isopropyl group, an n-butyl group, an isobutyl group, or a tert-butyl group substituted phenyl groups; preferably, R⁴² and R⁴³ are the phenyl groups.

In some preferred solutions, the first block polymer is 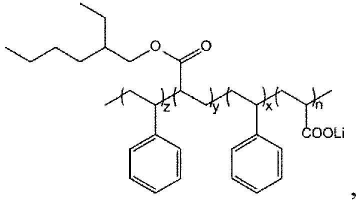 wherein n is 10~50; x is 200~500; y is 400~1000; z is 200~500.

In some preferred solutions, the alkenyl formic acid in the triblock polymer is 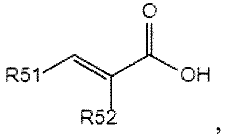 wherein R⁵¹ and R⁵² are independently hydrogen or a C_{1~4} alkyl group, and the C_{1~4} alkyl group is selected from a methyl group, an ethyl group, an n-propyl group, an isopropyl group, an n-butyl group, an isobutyl group, or a tert-butyl group; preferably, the alkenyl formic acid is an acrylic acid.

In some preferred solutions, the acrylate in the triblock polymer is 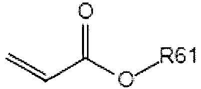 , wherein R⁶¹ is a C_{1~4} alkyl group, the C_{1~4} alkyl group is selected from a methyl group, an ethyl group, an n-propyl group, an isopropyl group, an n-butyl group, an isobutyl group, or a tert-butyl group; preferably, the acrylate is methyl acrylate.

In some preferred solutions, a degree of polymerization of the polymer block E is 70~700, and a degree of polymerization of the polymer block F is 70~700.

In some preferred solutions, the second block polymer has a structure shown as Formula (II); 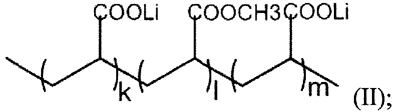 wherein k is 70~700; l is 70~700; m is 70~700.

In some preferred solutions, a mass ratio of the first block polymer to the second block polymer is 99:1-1:99; more preferably, 9:1~1:9, such as 9:1, 8:2, 7:3, 6:4, 5:5, 4:6, 7:3, 8:2, or 1:9.

In some more preferred solutions, the mass ratio of the first block polymer to the second block polymer is 9:1.

A second aspect of the disclosure provides a negative-electrode slurry for a lithium-ion battery, and the negative-electrode slurry includes a negative-electrode active material, a conductive agent, and the binder described in the first aspect of the disclosure.

In some preferred solutions, a mass ratio of the negative-electrode active material to the conductive agent to the binder is a:b:c, wherein a is 93~97; b is 3~5; c is 3~5, and a+b+c=100. For example, 95:2:3.

A third aspect of the disclosure also provides a negative electrode of a lithium-ion battery including the negative-electrode slurry, the negative electrode includes a current collector and a negative-electrode active material layer coated on the current collector, and the negative-electrode active material layer is formed by coating the negative-electrode slurry on the current collector.

The negative-electrode active material of the negative electrode of the disclosure is a material that can be intercalated in and deintercalated from lithium, which includes, but is not limited to, a carbon material such as crystalline carbon (natural graphite, artificial graphite, etc.), amorphous carbon, carbon-coated graphite, and resin-coated graphite, and an oxide material such as indium oxide, silicon oxide, tin oxide, lithium titanate, zinc oxide, and lithium oxide. The negative-electrode active material may also be lithium metal or a metal material that can form an alloy with lithium. Specific examples of the metal that can form an alloy with lithium include Cu, Sn, Si, Co, Mn, Fe, Sb, and Ag. A binary or ternary alloy containing the metals and lithium may also be used as the negative-electrode active material. The negative-electrode active materials may be used alone or in combination of two or more. From the viewpoint of high energy density, as the negative-electrode active material, a carbon material such as graphite and a Si-based active material such as Si, a Si alloy, and a silicon oxide may be combined. From the viewpoint of achieving both cycle characteristic and high energy density, as the negative-electrode active material, graphite and a Si-based active material may be combined. Regarding the combination, the ratio of the mass of the Si-based active material to the total mass of the carbon material and the Si-based active material may be 0.5% or more and 95% or less, 1% or more and 50% or less, or 2% or more and 40% or less. In various embodiments, the negative-electrode active material is dispersed in the dense cross-linked network structure.

Preferably, the negative-electrode active material includes graphite and/or a graphite-containing compound.

The conductive agent of the negative electrode of the disclosure is a conductive material that does not cause chemical changes and may be at least one selected from natural graphite, artificial graphite, carbon black, acetylene black, carbon fiber, a polyphenylene derivative, metal powders including copper, nickel, aluminum, and silver, and metal fiber.

The current collector of the negative electrode of the disclosure may be at least one selected from a copper foil, a nickel foil, a stainless steel foil, a titanium foil, a nickel foam, a copper foam, and a conductive metal-coated polymer material.

A fourth aspect of the disclosure provides a lithium-ion battery, and the lithium-ion battery includes a positive electrode, a negative electrode, a separator, and an electrolyte, wherein the negative electrode is the negative electrode provided by the fourth aspect of the disclosure.

The positive electrode of the lithium-ion battery of the disclosure includes a positive-electrode active material, and the positive-electrode active material may be a lithium-containing composite oxide. Specific examples of the lithium-containing composite oxide include, for example, LiMnO₂, LiFeO₂, LiMn₂O₄, Li₂FeSiO₄, LiNi_{1/3}Co_{1/3}Mn_{1/3}O₂, LiNi₅CO₂Mn₃O₂, Li₂Ni_{(1-x-y)}CoₓM_{y}O₂ (x, y, and z are values satisfying 0.01 ≤x≤0.20, 0≤y≤0.20, and 0.97≤z≤1.20, and M represents at least one element selected from Mn, V, Mg, Mo, Nb, and Al), LiFePO₄, and Li_{z}CO₍₁₋ₓ₎MₓO₂ (x and z are values satisfying 0≤x≤0.1 and 0.97≤z≤ 1.20, and M represents at least one element selected from a group composed of Mn, Ni, V, Mg, Mo, Nb, and Al). The positive-electrode active material may also be Li_{z}Ni_{(1-x-y)}CoₓM_{y}O₂ (x, y, and z are values satisfying 0.01 ≤x≤0.15, 0≤y≤0.15, and 0.97≤z≤1.20, and M represents at least one element selected from Mn, Ni, V, Mg, Mo, Nb, and Al) or Li_{z}CO₍₁₋ₓ₎MₓO₂ (x and z are values satisfying 0≤x≤0.1 and 0.97≤z≤ 1.20, and M represents at least one element selected from Mn, V, Mg, Mo, Nb, and Al).

Preferably, the positive-electrode active material is NCM523.

The separator of the lithium-ion battery of the disclosure is not particularly limited and a single-layer or laminated microporous film, woven fabric, non-woven fabric, etc. of polyolefin such as polypropylene and polyethylene may be used.

The non-aqueous electrolyte of the lithium-ion battery of the disclosure is not particularly limited and an electrolyte formulation commonly used in the art may be used, which will not be described in detail here.

On the basis of not violating common knowledge in the art, the above preferred conditions may be combined arbitrarily to obtain preferred examples of the disclosure.

Reagents and raw materials used in the disclosure are all commercially available.

Compared with the prior art, the embodiments of the disclosure have at least the following advantages:
(1) The binder provided by the first aspect of the disclosure has preferred ion-conducting capability, which helps to reduce the internal resistance of the electrode.
(2) The binder provided by the first aspect of the disclosure has preferred binding force while having preferred dispersing and thickening effects, and has a suitable modulus.
(3) Using the lithiated block polymer of the disclosure as the binder, the prepared lithium-ion battery has preferred fast charging capability, lower direct current internal resistance, and preferred low temperature discharge capability.

### DETAILED DESCRIPTION OF DISCLOSED EMBODIMENTS

In order for the objectives, technical solutions, and advantages of the embodiments of the disclosure to be clearer, each embodiment of the disclosure will be described in detail below with reference to specific examples. However, it should be understood that persons skilled in the art will appreciate that in each embodiment of the disclosure, numerous technical details are set forth in order to provide the reader with a better understanding of the present application. However, even without the technical details and various changes and modifications based on the following embodiments, the technical solutions claimed in the present application may still be implemented. In the following examples, experimental methods without specific conditions are usually in accordance with conventional conditions or in accordance with conditions suggested by the manufacturer. Percentages and parts are calculated by weight unless otherwise indicated.

### Example 1 Preparation of lithiated polyacrylic acid-styrene-isooctyl acrylate-styrene (PAALi-PSt-PEHA-PSt)

### Step 1: Preparation of a polyacrylic acid (PAA)

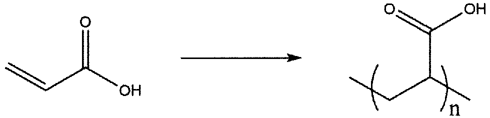

1.0 g of 2-mercapto-S-thiobenzoylacetic acid (molecular weight of 212.3 g/mol) was weighed, mixed with 3.0~17.0 g of refined acrylic monomer, and poured into a 500 mL three-necked flask. Another 0.2~0.5 g of potassium persulfate was weighed, dissolved in 5~10 g of deionized water and stored at low temperature for later use. The flask was placed on a water bath cauldron, added with magnets, stirred and dissolved at room temperature, then passed nitrogen for 30 min to remove oxygen therein, heated to 60~80°C, added with the potassium persulfate aqueous solution, reacted for 12~20 hours, and the polyacrylic acid (PAA) was obtained.

### Step 2: Preparation of polyacrylic acid-styrene (PAA-PSt)

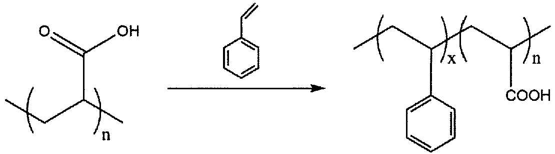

98.0~245.0 g of styrene monomer was weighed, slowly added into the flask after the reaction in Step 1 through a syringe, continued reacting at 60~80°C for 2~8 hours, and the polyacrylic acid-styrene (PAA-PSt) was obtained.

### Step 3: Preparation of polyacrylic acid-styrene-isooctyl acrylate (PAA-PSt-PEHA)

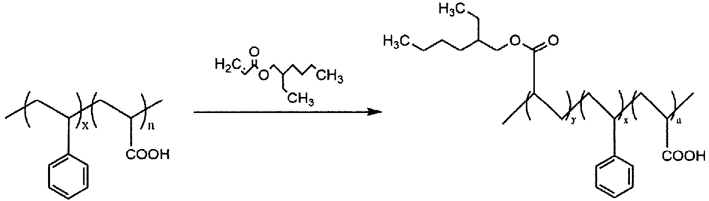

347.0~866.0 g of isooctyl acrylate monomer was weighed, slowly added into the flask after the reaction in Step 2 through a syringe, continued reacting at 60~80°C for 2~6 h, and the polyacrylic acid-styrene- isooctyl acrylate (PAA-PSt-PEHA) was obtained.

### Step 4: Preparation of polyacrylic acid-styrene-isooctyl acrylate-styrene (PAA-PSt-PEHA-PSt)

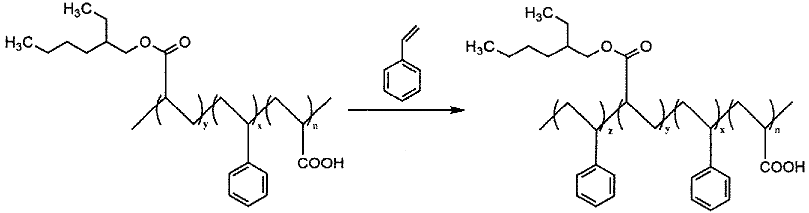

98.0~245.0 g of styrene monomer was weighed, slowly add into the flask after the reaction in Step 3 through a syringe, continued reacting at 60~80°C for 2~8 hours, the reacted product was washed with deionized water until the pH is 3~6, and the polyacrylic acid-styrene-isooctyl acrylate-styrene (PAA-PSt-PEHA-PSt) was obtained.

### Step 5: Preparation of lithiated polyacrylic acid-styrene-isooctyl acrylate-styrene (PAA-PSt-PEHA-PSt)

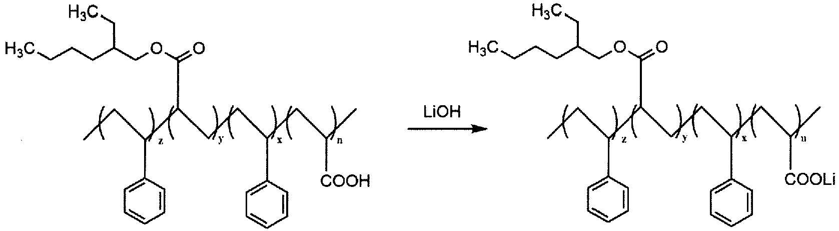

500 g of the polyacrylic acid-styrene-isooctyl acrylate-styrene (PAA-PSt-PEHA-PSt) obtained in Step 4 and 15~25 g of lithium hydroxide solution with a mass fraction of 5%~15% (containing 0.75~3.75 g of lithium hydroxide) were taken, stirred at a rotational speed of 300 rpm/h for 60 minutes, and the lithiated polyacrylic acid-styrene-isooctyl acrylate-styrene (PAA-PSt-PEHA-PSt) was obtained.

### Example 2 Preparation of lithiated polyacrylic acid-methyl acrylate-acrylic acid (PAALi-PMA-PAALi)

### Step 1: Preparation of a polyacrylic acid (PAA)

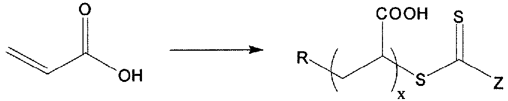

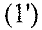

0.6 parts of RAFT reagent, 0.2 parts of initiator, and 20 parts of acrylic monomer were in 150 parts of deionized water solvent, stirred at 70°C for 18 hours, and a reaction mixture containing the compound of Formula (1') was obtained; wherein the RAFT reagent was 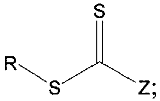 wherein R was an acetate group; Z was a benzyl group; the initiator was potassium persulfate.

### Step 2: Preparation of polyacrylic acid-methyl acrylate (PAA-PMA)

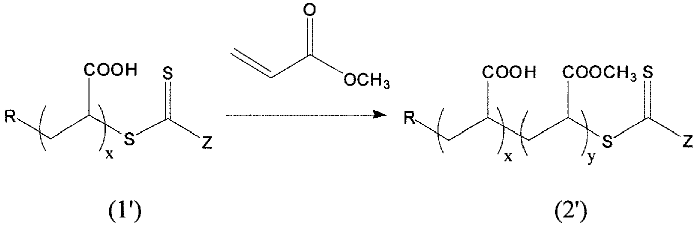

60 parts of methyl acrylate monomer was added into the reaction mixture obtained in Step 1, then continued stirring 70°C for 6 hours, and a reaction mixture containing the compound of Formula (2') was obtained.

### Step 3: Preparation of polyacrylic acid-methyl acrylate-acrylic acid (PAA-PMA-PAA)

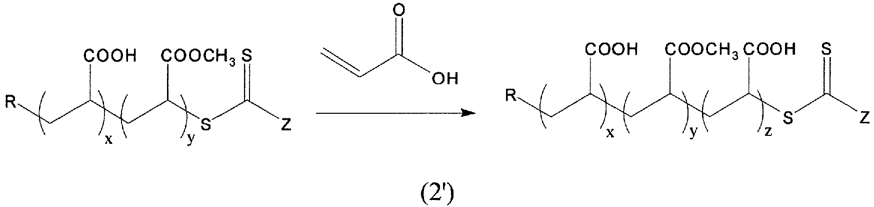

20 parts of acrylic acid monomer was added into the reaction mixture obtained in Step 2, then continued stirring at 70°C for 18 hours, and a reaction mixture containing the compound of Formula (3') was obtained.

### Step 4: Preparation of lithiated polyacrylic acid-methyl acrylate-acrylic acid (PAALi-PMA-PAALi)

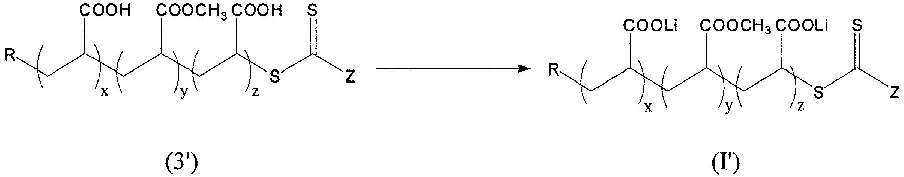

The pH of the reaction mixture obtained in Step 3 was adjusted to 5, a lithium hydroxide aqueous solution with a mass fraction of 10% was added, and lithiated at 25°C for 4 hours.

After the lithiation reaction was completed, the reaction mixture was precipitated, washed, and dried, and the lithiated polyacrylic acid-methyl acrylate-acrylic acid (PAALi-PMA-PAALi) shown as Formula (I') was obtained. The molecular weight of the finally obtained polymer was about 20,000.

### Example 3 Preparation of a binder

The lithiated polyacrylic acid-styrene-isooctyl acrylate-styrene (PAALi-PSt-PEHA-PSt) prepared in Example 1 and the lithiated polyacrylic acid-methyl acrylate-acrylic acid (PAALi-PMA-PAALi) prepared in Example 2 were stirred and mixed according to the mass ratio of 9:1, the stirring speed was 200 rpm, the temperature was 30°C, and the time was 2 hours.

**Table 1**

| Group | Mass ratio of PAALi-St-PEHA-St to PAALi-PMA-PAALi |
|---|---|
| Example 4 | 8:2 |
| Example 5 | 7:3 |
| Example 6 | 6:4 |
| Example 7 | 5:5 |
| Example 8 | 4:6 |
| Example 9 | 3:7 |
| Example 10 | 2:8 |
| Example 11 | 1:9 |

### Example 12 Preparation of lithium-ion battery

### Preparation of a positive electrode piece

A positive-electrode active material NCM523, conductive carbon black Super-P, and binder polyvinylidene fluoride (PVDF) were mixed in a mass ratio of 96:2:2, then dispersed in N-methyl-2-pyrrolidone (NMP), and a positive-electrode slurry was obtained. The obtained positive-electrode slurry was evenly coated on two surfaces of an aluminum foil, dried, calendered, and vacuum-dried at 80°, an aluminum lead wire was welded using an ultrasonic welder, a positive electrode plate was obtained, and the thickness of the plate was 120~150 µm.

### Preparation of a negative electrode piece

Composite negative-electrode active material graphite, conductive carbon black Super-P, and the binder prepared in Example 3 were mixed in a mass ratio of 95:2:3, then dispersed in deionized water, and a negative-electrode slurry was obtained. The slurry was coated on two surfaces of a copper foil, dried, calendered, and vacuum-dried, a nickel lead wire was welded using an ultrasonic welder, a negative electrode plate was obtained, and the thickness of the plate was 80~100 µm.

### Preparation of a core

A separator with a thickness of 20 µm was placed between the positive electrode plate and the negative electrode plate, a sandwich structure composed of the positive electrode plate, the negative electrode plate, and the separator was then wound, the wound body was flattened and placed in an aluminum foil packaging bag, vacuum-baked at 85°C for 48 h, and the core to be injected was obtained.

### Core injection

An electrolyte was injected into the core in a glove box, vacuum-sealed, and kept at rest for 24 h. Then, the routinization of the first charging was performed according to the following steps of: charging to 3.05 V with 0.02 C constant current, charging to 3.75 V with 0.05 C constant current, charging to 4.05 V with 0.2 C constant current, and vacuum-sealed. Then, further charged to 4.2 V with 0.33 C constant current, and after being left at room temperature for 24 hours, discharged to 3.0 V with 0.2 C constant current.

For Example 13 to Example 20, the lithium-ion battery was prepared according to the same method as Example 12, and the difference was that in the preparation of the negative electrode piece, the binder used was respectively the binder prepared in Example 3 to Example 11.

### Comparative Example 1 Preparation of a lithium-ion battery

### Preparation of a positive electrode piece

A positive-electrode active material NCM523, conductive carbon black Super-P, and binder polyvinylidene fluoride (PVDF) were mixed in a mass ratio of 96:2:2, then dispersed in N-methyl-2-pyrrolidone (NMP), and a positive-electrode slurry was obtained. The obtained positive-electrode slurry was evenly coated on two surfaces of an aluminum foil, dried, calendered, and vacuum-dried at 80°, an aluminum lead wire was welded using an ultrasonic welder, a positive electrode plate was obtained, and the thickness of the plate was 120~150 µm.

### Preparation of a negative electrode piece

Composite negative-electrode active material graphite, conductive carbon black Super-P, and PAA binder were mixed in a mass ratio of 95:2:3, then dispersed in deionized water, and a negative-electrode slurry was obtained. The slurry was coated on two surfaces of a copper foil, dried, calendered, and vacuum-dried, a nickel lead wire was welded using an ultrasonic welder, a negative electrode plate was obtained, and the thickness of the plate was 80~100 µm.

### Preparation of a core

A separator with a thickness of 20 µm was placed between the positive electrode plate and the negative electrode plate, a sandwich structure composed of the positive electrode plate, the negative electrode plate, and the separator was then wound, the wound body was flattened and placed in an aluminum foil packaging bag, vacuum-baked at 85°C for 48 h, and the core to be injected was obtained.

### Core injection

An electrolyte was injected into the core in a glove box, vacuum-sealed, and kept at rest for 24 h. Then, the routinization of the first charging was performed according to the following steps of: charging to 3.05 V with 0.02 C constant current, charging to 3.75 V with 0.05 C constant current, charging to 4.05 V with 0.2 C constant current, and vacuum-sealed. Then, further charged to 4.2 V with 0.33 C constant current, and after being left at room temperature for 24 hours, discharged to 3.0 V with 0.2 C constant current.

For Comparative Example 2, the lithium-ion battery was prepared according to the same method as Comparative Example 1, and the difference was that in the preparation of the negative electrode piece, the binder used was an SBR binder.

For Comparative Example 3, the lithium-ion battery was prepared according to the same method as Comparative Example 1, and the difference was that in the preparation of the negative electrode piece, the binder used was only lithiated polyacrylic acid-styrene- isooctyl acrylate-styrene (PAALi-PSt-PEHA-PSt).

For Comparative Example 4, the lithium-ion battery was prepared according to the same method as Comparative Example 1, and the difference was that in the preparation of the negative electrode piece, the binder used was only lithiated polyacrylic acid-methyl acrylate-acrylic acid (PAALi-PMA-PAALi).

### Test Example 1

### (1) Tensile performance test of the binder

The binder prepared in Example 3 was made into a film, and the preparation process was as follows: 1.2 g of the binder was poured into a polytetrafluoroethylene watch glass with a diameter of 10 cm, covered with a layer of filter paper, the filter paper was held down, placed into a fume hood, dried in convection at room temperature for a week, then placed into a vacuum oven at 60°C, vacuum-dried for 12 h, and sample preparation was completed.

Dumbbell-shaped splines were cut on a cutting machine according to the dimensions indicated for Type 2 and Type 4 specimens in ISO 37-1994 and implemented in accordance with the GB 16421-1996 standard, and the number of splines for each polymer was 5. The tensile test was performed using a universal material testing machine. Test conditions: a force sensor with a range of 50 N was used, the tensile rate was 1 mm/min, each polymer sample was subjected to 5 parallel tests, and an average value was obtained. The results obtained are shown in Table 2.

The tensile performance test of the binder, the PAA binder, the SBR binder, the lithiated polyacrylic acid-styrene- isooctyl acrylate-styrene (PAALi-PSt-PEHA-PSt), and the lithiated polyacrylic acid-methyl acrylate-acrylic acid (PAALi-PMA-PAALi) prepared in Examples 4 to 11 were according to the same method. The results obtained are shown in Table 2.

**Table 2**

| Group | Modulus/MPa |
|---|---|
| Example 3 | 20.4 |
| Example 4 | 22.5 |
| Example 5 | 25.1 |
| Example 6 | 27.9 |
| Example 7 | 30.2 |
| Example 8 | 31.7 |
| Example 9 | 33.5 |
| Example 10 | 38.7 |
| Example 11 | 40.0 |
| PAA binder | 85.3 |
| SBR binder | 19.3 |
| Lithiated polyacrylic acid-styrene- isooctyl acrylate-styrene (PAALi-PSt-PEHA-PSt) | 18.2 |
| Lithiated polyacrylic acid-methyl acrylate-acrylic acid (PAALi-PMA-PAALi) | 48.5 |

### (2) Fast charging capability test

At 25°C, a constant current charging test was performed on the lithium-ion battery prepared in the examples and the comparative examples by adopting a rate of 2 C, a rate charging capacity retention rate was calculated (the charging retention rate of a battery at the rate of 2 C = the capacity released after the battery is charged at the rate of 2 C / the capacity released after the battery is charged at a rate of 1/3 C). The results obtained are shown in Table 3.

### (3) Direct current internal resistance (DCR) test

At 25°C, the battery prepared in the examples and the comparative examples was respectively discharged at 4 C for 30 s at a state of charge (SOC) of 50%, and the direct current internal resistance R = -(V1-V2)/I, wherein V1 is the voltage before discharge, V2 is the voltage after discharge, and I is the discharge current, and the direct current internal resistance was calculated. The results obtained are shown in Table 3.

### (4) Low temperature discharge capability test

The battery prepared in the examples and the comparative examples was taken, and a discharge capacity retention rate at -20°C was measured: at 25°C, the fully charged battery was discharged to 3.0 V at 1 C, and an initial discharge capacity was recorded as DC (25°C). Then, at 25°C, charged to 4.2 V with 1 C constant current and constant voltage, and the cut-off current was 0.05 C. Then, cooled to -20°C, kept at rest for 4 h, then discharged to 3.0 V at 1 C, and the discharge capacity DC (-20°C) was recorded. At -20°C, the discharge capacity retention rate = 100%*DC (-20°C)/DC (25°C). The results obtained are shown in Table 3.

**Table 3**

| Group | 2C charging capacity retention rate | Room temperature 50% 4C 30s discharge DCR | -20°C discharge capacity retention rate |
|---|---|---|---|
| Example 12 | 85.2% | 39.2 mΩ | 81.3% |
| Example 13 | 84.6% | 40.2 mΩ | 79.2% |
| Example 14 | 83.2% | 43.2 mΩ | 77.6% |
| Example 15 | 83.4% | 44.5 mΩ | 74.2% |
| Example 16 | 83.2% | 43.9 mΩ | 76.2% |
| Example 17 | 82.1% | 46.7 mΩ | 72.1% |
| Example 18 | 81.9% | 46.6 mΩ | 74.2% |
| Example 19 | 80.7% | 47.5 mΩ | 71.2% |
| Example 20 | 80.5% | 48.4 mΩ | 69.5% |
| Comparative Example 1 | 65.2% | 82 mΩ | 56.1% |
| Comparative Example 2 | 61.4% | 89 mΩ | 54.3% |
| Comparative Example 3 | 80.2% | 45.2 mΩ | 75.8% |
| Comparative Example 4 | 80.3% | 48.6 mΩ | 68.7% |

Persons skilled in the art can understand that the above examples are specific examples for implementing the disclosure.

## Claims

1. A binder, comprising a first block polymer and a second block polymer, wherein
the first block polymer is a lithiated tetrablock polymer, and the tetrablock polymer has a structure shown as B-C-B-A, wherein A represents a polymer block A, B represents a polymer block B, and C represents a polymer block C;
the polymer block A is polymerized from an alkenyl formic acid monomer;
the polymer block B is polymerized from an aromatic vinyl monomer;
the polymer block C is polymerized from an acrylate monomer; and
the second block polymer is a lithiated triblock polymer, and the triblock polymer has a structure shown as E-F-E, wherein E represents a polymer block E, and F represents a polymer block F;
the polymer block E is polymerized from an alkenyl formic acid monomer;
the polymer block F is polymerized from an acrylate monomer.

2. The binder according to claim 1, wherein in the tetrablock polymer, a structure of the alkenyl formic acid monomer is 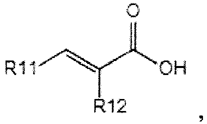 wherein R¹¹ and R¹² are independently hydrogen or a C₁₋₄ alkyl group;
and/or in the tetrablock polymer, a structure of the aromatic vinyl monomer is 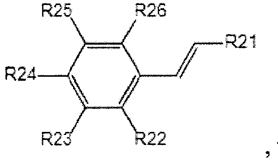 wherein R²¹, R²², R²³, R²⁴, R²⁵, and R²⁶ are independently hydrogen or a C_{1~4} alkyl group;
and/or in the tetrablock polymer, a structure of the acrylate monomer is 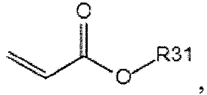 wherein R³¹ is a linear or branched C_{1~10} alkyl group;
and/or in the triblock polymer, the alkenyl formic acid is 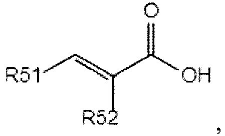 wherein R⁵¹ and R⁵² are independently hydrogen or a C_{1~4} alkyl group;
and/or in the triblock polymer, the acrylate is 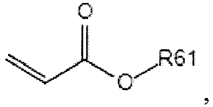 wherein R⁶¹ is a C_{1~4} alkyl group.

3. The binder according to claim 2, wherein in the tetrablock polymer, the alkenyl formic acid monomer is an acrylic acid;
and/or in the tetrablock polymer, the aromatic vinyl monomer is styrene;
and/or in the tetrablock polymer, a structure of the acrylate monomer is 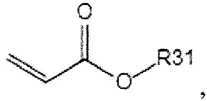 wherein R³¹ is a linear or branched C_{4~8} alkyl group;
and/or in the triblock polymer, the alkenyl formic acid is an acrylic acid;
and/or in the triblock polymer, the acrylate is methyl acrylate.

4. The binder according to claim 1, wherein the first block polymer has a structure shown as Formula (I), wherein n is 10~50; x is 200~500; y is 400~1000; z is 200~500, R⁴¹ is a C_{4~8} alkyl group, and R⁴² and R⁴³ are a phenyl group or a C_{1~4} alkyl group substituted phenyl group; 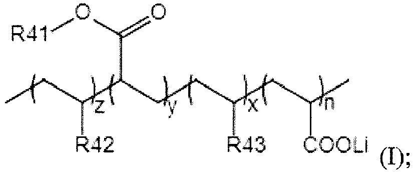 and/or the second block polymer has a structure shown as Formula (II), wherein k is 70~700, 1 is 70~700, and m is 70~700;

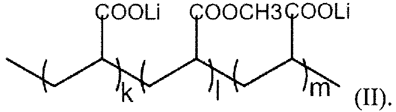

5. The binder according to claim 4, wherein the first block polymer is 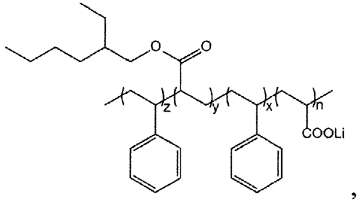 wherein n is 10~50; x is 200~500; y is 400~1000; z is 200~500.

6. The binder according to any one of claims 1 to 5, wherein a mass ratio of the first block polymer to the second block polymer is 99:1~1:99.

7. The binder according to any one of claims 1 to 5, wherein a mass ratio of the first block polymer to the second block polymer is 9:1.

8. The binder according to any one of claims 1 to 3, wherein in the tetrablock polymer, a degree of polymerization of the polymer block A is 10~50, a degree of polymerization of the polymer block B is 200~500, and a degree of polymerization of the polymer block C is 400~1000;
and/or in the triblock polymer, a degree of polymerization of the polymer block E is 70~700, and a degree of polymerization of the polymer block F is 70~700.

9. A negative-electrode slurry for a lithium-ion battery, wherein the negative-electrode slurry comprises a negative-electrode active material, a conductive agent, and the binder according to any one of claims 1 to 8.

10. The negative-electrode slurry according to claim 9, wherein a mass ratio of the negative-electrode active material to the conductive agent to the binder is a:b:c, wherein a is 93-97, b is 3~5, c is 3~5, and a+b+c=100.

11. A negative electrode, comprising a current collector and a negative-electrode active material layer coated on the current collector, wherein the negative-electrode active material layer is formed by coating a negative-electrode slurry according to claim 9 or 10 on the current collector.

12. The negative electrode according to claim 11, wherein the negative-electrode active material comprises graphite and/or a graphite-containing compound.

13. A lithium-ion battery, comprising a positive electrode, a separator, an electrolyte, and the negative electrode according to claim 11 or 12.

## Patentansprüche

1. Bindemittel, umfassend ein erstes Blockpolymer und ein zweites Blockpolymer, wobei
das erste Blockpolymer ein lithiiertes Tetrablockpolymer ist und das Tetrablockpolymer eine Struktur aufweist, die als B-C-B-A gezeigt ist, wobei A einen Polymerblock A darstellt, B einen Polymerblock B darstellt und C einen Polymerblock C darstellt;
der Polymerblock A aus einem Alkenylformylsäuremonomer polymerisiert ist;
der Polymerblock B aus einem aromatischen Vinylmonomer polymerisiert ist;
der Polymerblock C aus einem Acrylatmonomer polymerisiert ist; und
das zweite Blockpolymer ein lithiiertes Triblockpolymer ist und das Triblockpolymer eine Struktur aufweist, die als E-F-E gezeigt ist, wobei E einen Polymerblock E darstellt und F einen Polymerblock F darstellt;
der Polymerblock E aus einem Alkenylformylsäuremonomer polymerisiert ist; der
Polymerblock F aus einem Acrylatmonomer polymerisiert ist.

2. Bindemittel nach Anspruch 1, wobei in dem Tetrablockpolymer eine Struktur des Alkenylformylsäuremonomers 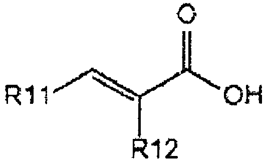 ist, wobei R¹¹ und R¹² unabhängig Wasserstoff oder eine C₁₋₄-Alkylgruppe sind;
und / oder in dem Tetrablockpolymer eine Struktur des aromatischen Vinylmonomers 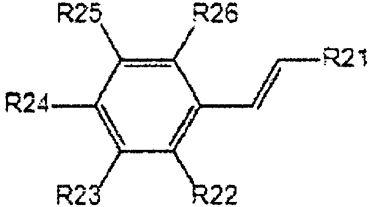 ist, wobei R²¹, R²², R²³, R²⁴, R²⁵ und R²⁶ unabhängig Wasserstoff oder eine C₁₋₄-Alkylgruppe sind;
und / oder in dem Tetrablockpolymer eine Struktur des Acrylatmonomers 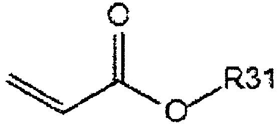 ist, wobei R³¹ eine lineare oder verzweigte C₁₋₁₀-Alkylgruppe ist;
und / oder in dem Triblockpolymer die Alkenylformylsäure 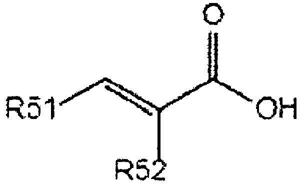 ist, wobei R⁵¹ und R⁵² unabhängig Wasserstoff oder eine C₁₋₄-Alkylgruppe sind;
und / oder in dem Triblockpolymer das Acrylat 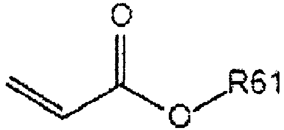 ist, wobei R⁶¹ eine C₁₋₄-Alkylgruppe ist.

3. Bindemittel nach Anspruch 2, wobei in dem Tetrablockpolymer das Alkenylformylsäuremonomer eine Acrylsäure ist;
und / oder in dem Tetrablockpolymer das aromatische Vinylmonomer Styrol ist;
und / oder in dem Tetrablockpolymer eine Struktur des Acrylatmonomers 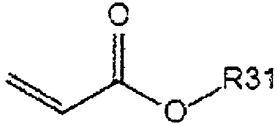
ist, wobei R³¹ eine lineare oder verzweigte C₄₋₈-Alkylgruppe ist;
und / oder in dem Triblockpolymer die Alkenylformylsäure eine Acrylsäure ist;
und / oder in dem Triblockpolymer das Acrylat Methylacrylat ist.

4. Bindemittel nach Anspruch 1, wobei das erste Blockpolymer eine Struktur gemäß Formel (I) aufweist, wobei n 10-50 ist; x 200-500 ist; y 400-1000 ist; z 200-500 ist, R⁴¹ eine C₄₋₈-Alkylgruppe ist und R⁴² und R⁴³ eine Phenylgruppe oder eine C₁₋₄-Alkylgruppe-substituierte Phenylgruppe sind; 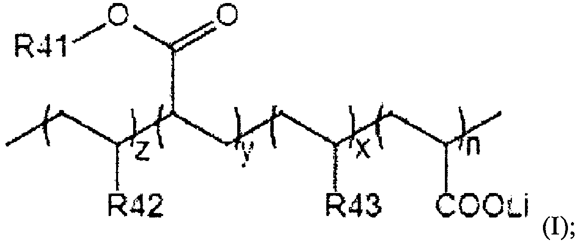 und / oder das zweite Blockpolymer eine Struktur gemäß Formel (II) aufweist, wobei k 70-700 ist, l 70-700 ist und m 70-700 ist;

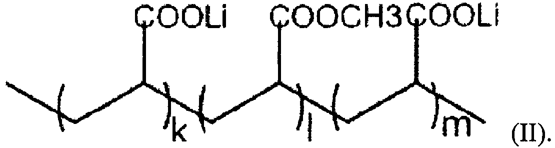

5. Bindemittel nach Anspruch 4, wobei das erste Blockpolymer 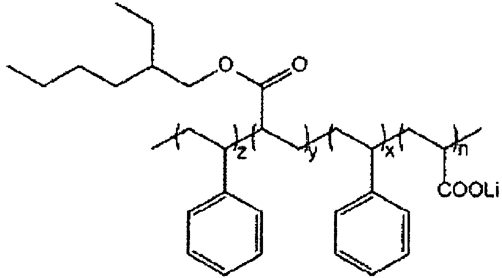 ist, wobei n 10-50 ist; x 200-500 ist; y 400-1000 ist; z 200-500 ist.

6. Bindemittel nach einem der Ansprüche 1 bis 5, wobei ein Massenverhältnis des ersten Blockpolymers zu dem zweiten Blockpolymer 99:1-1:99 beträgt.

7. Bindemittel nach einem der Ansprüche 1 bis 5, wobei ein Massenverhältnis des ersten Blockpolymers zu dem zweiten Blockpolymer 9:1 beträgt.

8. Bindemittel nach einem der Ansprüche 1 bis 3, wobei in dem Tetrablockpolymer ein Polymerisationsgrad des Polymerblocks A 10-50 beträgt, ein Polymerisationsgrad des Polymerblocks B 200-500 beträgt und ein Polymerisationsgrad des Polymerblocks C 400-1000 beträgt;
und / oder in dem Triblockpolymer ein Polymerisationsgrad des Polymerblocks E 70-700 beträgt und ein Polymerisationsgrad des Polymerblocks F 70-700 beträgt.

9. Negativelektroden-Aufschlämmung für eine Lithium-Ionen-Batterie, wobei die Negativelektroden-Aufschlämmung ein Negativelektroden-Aktivmaterial, ein Leitfähigkeitszusatz und das Bindemittel gemäß einem der Ansprüche 1 bis 8 umfasst.

10. Negativelektroden-Aufschlämmung nach Anspruch 9, wobei ein Massenverhältnis des Negativelektroden-Aktivmaterials zu dem Leitfähigkeitszusatz zu dem Bindemittel a:b:c ist, wobei a 93-97 ist, b 3-5 ist, c 3-5 ist und a+b+c=100 ist.

11. Negativelektrode, umfassend einen Stromkollektor und eine auf den Stromkollektor aufgetragene Schicht aus Negativelektroden-Aktivmaterial, wobei das Negativelektroden-Aktivmaterial durch Auftragen einer Negativelektroden-Aufschlämmung nach Anspruch 9 oder 10 auf dem Stromkollektor ausgebildet wird.

12. Negativelektrode nach Anspruch 11, wobei das Negativelektroden-Aktivmaterial Graphit und / oder eine graphithaltige Verbindung umfasst.

13. Lithium-Ionen-Batterie, umfassend eine Positivelektrode, einen Separator, einen Elektrolyten und die Negativelektrode nach Anspruch 11 oder 12.

## Revendications

1. Liant comprenant un premier polymère séquencé et un deuxième polymère séquencé, dans lequel
le premier polymère séquencé est un polymère tétrabloc lithié, et le polymère tétrabloc a une structure représentée par B-C-B-A, où A représente un bloc polymère A, B représente un bloc polymère B et C représente un bloc polymère C;
le bloc polymère A est polymérisé à partir d'un monomère d'acide alcénylformique;
le bloc polymère B est polymérisé à partir d'un monomère vinylique aromatique ;
le bloc polymère C est polymérisé à partir d'un monomère acrylate; et
le deuxième polymère séquencé est un polymère tribloc lithié, et le polymère tribloc a une structure représentée par E-F-E, où E représente un bloc polymère E, et F représente un bloc polymère F;
le bloc polymère E est polymérisé à partir d'un monomère d'acide alcénylformique;
le bloc polymère F est polymérisé à partir d'un monomère acrylate.

2. Le liant selon la revendication 1, dans lequel, dans le polymère tétrabloc, la structure du monomère alcénylformique est, 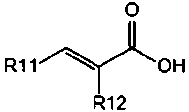 où R¹¹ et R¹² sont indépendamment un atome d'hydrogène ou un groupe alkyle en C₁₋₄;
et/ou dans le polymère tétrabloc, une structure du monomère vinylique aromatique est 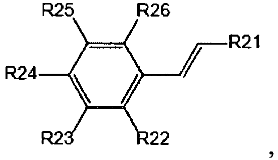 où R²¹, R²², R²³, R²⁴, R²⁵ et R²⁶ sont indépendamment un atome d'hydrogène ou un groupe alkyle en C1₋₄;
et/ou dans le polymère tétrabloc, une structure du monomère acrylate est 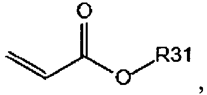 où R³¹ est un groupe alkyle en C₁₋₁₀ linéaire ou ramifié;
et/ou dans le polymère tribloc, l'acide alcénylformique est 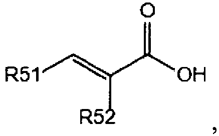 où R⁵¹ et R⁵² sont indépendamment un atome d'hydrogène ou un groupe alkyle en C₁₋₄;
et/ou dans le polymère tribloc, l'acrylate est 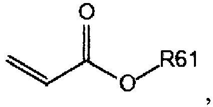 où R⁶¹ est un groupe alkyle en C₁₋₄.

3. Liant selon la revendication 2, dans lequel, dans le polymère tétrabloc, le monomère d'acide alcénylformique est un acide acrylique;
et/ou dans le polymère tétrabloc, le monomère vinylique aromatique est le styrène;
et/ou dans le polymère tétrabloc, une structure du monomère acrylate est 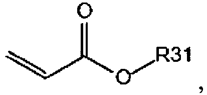 où R³¹ est un groupe alkyle en C_{4~8} linéaire ou ramifié;
et/ou dans le polymère tribloc, l'acide alcénylformique est un acide acrylique;
et/ou dans le polymère tribloc, l'acrylate est l'acrylate de méthyle.

4. Liant selon la revendication 1, dans lequel le polymère à premier bloc a une structure représentée par la formule (I), dans laquelle n vaut 10 à 50; x est compris entre 200-500; y est compris entre 400-1000; z est compris entre 200-500, R⁴¹ est un groupe alkyle en C₄₋₈, et R⁴² et R⁴³ sont un groupe phényle ou un groupe phényle substitué par un groupe alkyle en C₁₋₄; 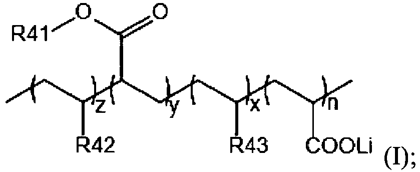 et/ou le deuxième polymère séquencé a une structure représentée par la formule (II), dans laquelle k vaut 70-700, 1 vaut 70-700 et m vaut 70-700;

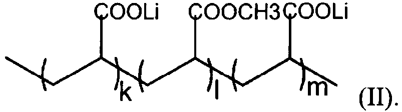

5. Le liant selon la revendication 4, dans lequel le premier polymère séquencé est 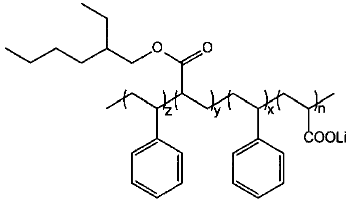 où n vaut 10-50 ; x vaut 200-500 ; y vaut 400-1000 ; z vaut 200-500.

6. Liant selon l'une quelconque des revendications 1 à 5, dans lequel le rapport massique entre le premier polymère séquencé et le deuxième polymère séquencé est de 99:1 à 1:99.

7. Liant selon l'une quelconque des revendications 1 à 5, dans lequel le rapport massique entre le premier polymère séquencé et le deuxième polymère séquencé est de 9:1.

8. Liant selon l'une quelconque des revendications 1 à 3, dans lequel, dans le polymère tétrabloc, le degré de polymérisation du bloc polymère A est de 10 à 50, le degré de polymérisation du bloc polymère B est de 200 à 500 et le degré de polymérisation du bloc polymère C est de 400 à 1000 ;
et/ou dans le polymère tribloc, le degré de polymérisation du bloc polymère E est de 70 à 700, et le degré de polymérisation du bloc polymère F est de 70 à 700.

9. Suspension d'électrode négative pour une batterie lithium-ion, dans laquelle la suspension d'électrode négative comprend un matériau actif d'électrode négative, un agent conducteur et le liant selon l'une quelconque des revendications 1 à 8.

10. La suspension d'électrode négative selon la revendication 9, dans laquelle le rapport massique entre le matériau actif d'électrode négative, l'agent conducteur et le liant est de a:b:c, où a est compris entre 93-97, b est compris entre 3-5, c est compris entre 3-5, et a+b+c=100.

11. Électrode négative, comprenant un collecteur de courant et une couche de matériau actif d'électrode négative revêtue sur le collecteur de courant, dans laquelle la couche de matériau actif d'électrode négative est formée en revêtant une suspension d'électrode négative selon la revendication 9 ou 10 sur le collecteur de courant.

12. Électrode négative selon la revendication 11, dans laquelle le matériau actif de l'électrode négative comprend du graphite et/ou un composé contenant du graphite.

13. Batterie lithium-ion, comprenant une électrode positive, un séparateur, un électrolyte et l'électrode négative selon la revendication 11 ou 12.
